# EUROPÄISCHE PATENTSCHRIFT

(11) **EP 1 510 980 B1**
(45) Veröffentlichungstag und Bekanntmachung des Hinweises auf die Patenterteilung: **11.10.2006**
(21) Anmeldenummer: 04025818.8
(22) Anmeldetag: 28.01.2002
(51) Int. Cl.: G07D 11/00, G07D 7/04, G01N 27/90

(54) **Vorrichtung zur Entgegennahme von Banknoten**
Device for accepting banknotes
Dispositif de réception de billets de banque

(30) Priorität: 05.02.2001 DE 10105082
(43) Veröffentlichungstag der Anmeldung: 02.03.2005
(62) Teilanmeldung aus: 02712863.6
(73) Patentinhaber: Wincor Nixdorf International GmbH, 33106 Paderborn (DE)
(72) Erfinder: Landwehr, Martin, 33100 Paderborn (DE); Ademmer, Heinz, 59590 Geseke (DE); Becker, Rainer, 66399 Mandelbachtal (DE); Both, Norbert, 66636 Tholey (DE); Kiselmann, Ifrit, 66640 Bliekastel (DE); Rodner, Christoph, 66280 Sulzbach (DE); Yashan, Andriy, 66125 Saarbrücken (DE)
(74) Vertreter: Schaumburg, Thoenes, Thurn, Landskron

(56) Entgegenhaltungen:
- WO-A-99/24939
- DE-A- 3 837 239
- PATENT ABSTRACTS OF JAPAN Bd. 1998, Nr. 07, 31. März 1998 (1998-03-31) & JP 01 099195 A (OKI ELECTRIC IND CO LTD), 18. April 1989 (1989-04-18)

## Beschreibung

Die Erfindung betrifft eine Vorrichtung zur Entgegennahme von Banknoten, insbesondere einen Geldautomaten, mit einem Fach zur Aufnahme eines Banknotenbündels und einem Vereinzelungsmechanismus zum Abziehen einzelner Banknoten von dem Bündel, wobei entlang mindestens einer der das Fach begrenzenden Wände eine Sensoranordnung zum Erfassen von mit den Banknoten verbundenen metallischen Fremdkörpern angeordnet ist und die Sensoranordnung als Wirbelstromsensor ausgebildet ist.

Die mechanischen Einrichtungen innerhalb eines Geldautomaten sind hochentwickelte komplexe Komponenten, die sorgfältig hergestellt und justiert sind, um einzelne Banknoten mit hoher Taktfrequenz prüfen, sortieren, zählen und transportieren zu können. Entsprechend empfindlich reagieren diese mechanischen Einrichtungen auf Fremdkörper, insbesondere Metallgegenstände, wie Büroklammern, Stecknadeln, Münzen oder dergleichen. Es muß daher verhindert werden, daß solche Fremdkörper zusammen mit den Banknoten in das Gerät gelangen.

Eine Vorrichtung der eingangs genannten Art ist beispielsweise aus der DE 38 37 239 bekannt. Ferner ist es aus der JP 01 099 195 A bei einem Geldautomaten bekannt, Sensorpaare beiderseits eines Eingabeschachtes für Banknoten anzuordnen, um das Einführen von Fremdkörpern oder Münzen in den Eingabeschacht festzustellen und zu verhindern, dass diese Gegenstände in den Geldautomaten gelangen.

Der Erfindung liegt die Aufgabe zugrunde, eine Vorrichtung der vorstehend genannten Art so auszubilden, dass eine lückenlose Überwachung des Aufnahmefaches ermöglicht wird und eine Beschädigung mechanischer Komponenten in dem Gerät durch metallische Fremdkörper vermieden werden kann.

Diese Aufgabe wird erfindungsgemäß durch die im Anspruch 1 angegebenen Merkmale gelöst.

Wenn die Sensoranordnung metallische Gegenstände an dem eingelegten Banknotenbündel entdeckt, wird das Einziehen der Banknoten unterbrochen oder gar nicht erst begonnen. Der Kunde kann aufgefordert werden, die Banknoten noch einmal auf Fremdgegenstände zu überprüfen.

Mit dieser Anordnung lässt sich eine hohe Empfindlichkeit des Wirbelstromsensors erreichen, so dass auch kleine Metallteile wie beispielsweise Heftklammern in einem Scheinbündel erfasst werden können.

Bei der erfindungsgemäßen Vorrichtung kann eine Empfängerspule Signale von zwei nebeneinanderliegenden Senderspulen erhalten. Dadurch wird die Breite des Faches lückenlos überwacht und es wird vermieden, dass ein kleiner Metallgegenstand, der gerade zwischen zwei Spulen liegt, übersehen, d.h. nicht erfasst wird.

Wie dies oben bereits beschrieben wurde, werden die Spulen der Spulensätze jeweils über eine Multiplexerschaltung nacheinander mit einem Senderoszillator bzw. einer Empfangs- und Auswerteschaltung verbunden, wobei auch jeweils eine Mehrzahl von voneinander beabstandeten Spulen gleichzeitig aktiviert werden kann, um die Sensoranordnung mit hoher Geschwindigkeit abtasten zu können. Dies liefert die Möglichkeit, beim Einschieben des Scheinbündels, d.h. während der Bewegung desselben die gesamte Fachbreite zu überwachen.

Um eine Beeinflussung und Störung des Sensors durch Metallteile des Gerätes, in das er eingebaut ist, zu vermeiden, sind die Spulen beider Spulensätze vorzugsweise auf der dem Fach zugewandten Seite einer metallischen Trägerplatte angeordnet, welche die Spulen gegenüber Störungen aus dem Gerät abschirmt.

Weitere Merkmale und Vorteile der Erfindung ergeben sich aus der folgenden Beschreibung, welche in Verbindung mit den beigefügten Zeichnungen die Erfindung anhand eines Ausführungsbeispieles erläutert. Darin zeigen:
- Figur 1: eine schematische Seitenansicht eines Banknotenaufnahmefaches eines Geldautomaten,
- Figur 2: eine schematische Draufsicht auf eine Trägerplatte mit einer Meßspule und einer Kompensationsspule,
- Figur 3: ein Prinzipschaltbild der Sensoranordnung mit Oszillator und Auswerteschaltung,
- Figur 4: einen schematischen Teilschnitt durch den Eingabeschacht eines Bankautomaten,
- Figur 5: eine teilweise schematische Draufsicht auf eine Trägerplatte mit einem Satz von Spulen und
- Figur 6: eine schematische Draufsicht auf zwei gegeneinander versetzte Spulensätze.

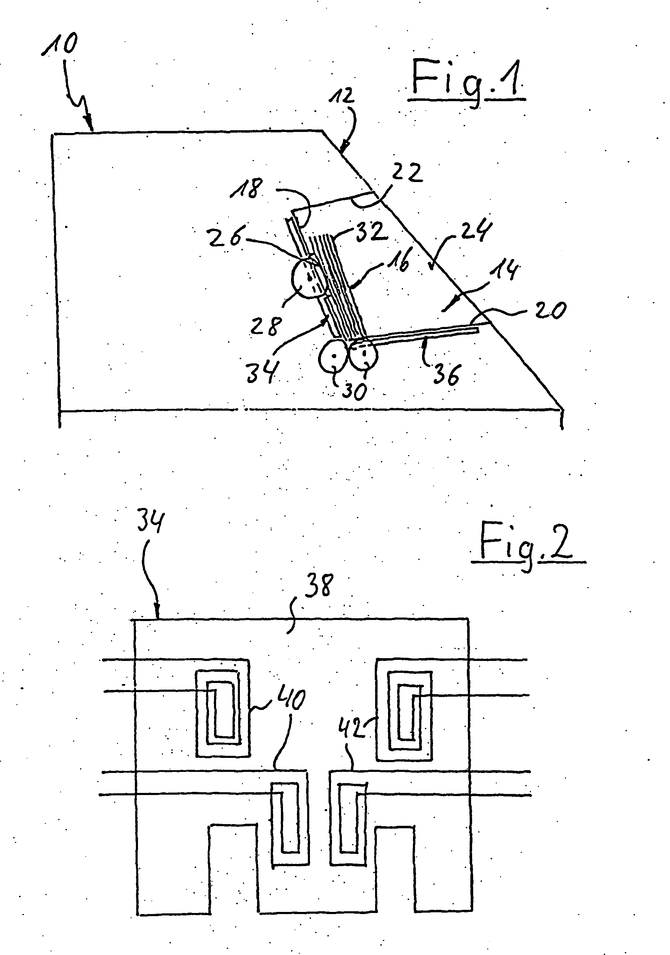

In Figur 1 ist mit 10 das Gehäuse eines Geldautomaten bezeichnet, der zur Entgegennahme von Banknoten geeignet ist. Der Geldautomat kann im übrigen in irgendeiner bekannten Weise ausgebildet sein und braucht hier nicht näher erläutert zu werden. Innerhalb des Bedienungsfeldes 12 des Geldautomaten ist ein Aufnahmefach 14 zum Einlegen eines Banknotenbündels 16 ausgebildet. Das Aufnahmefach 14 hat eine Rückwand 18, einen Boden 20, eine Deckfläche 22 und zwei Seitenwände 24, von denen hier nur eine dargestellt ist. Das Banknotenbündel 16 wird so eingelegt, dass es auf dem Boden 20 hochkant steht und flach an der Rückwand 18 anliegt. Die Rückwand 18 hat Durchbrechungen 26, durch die Abzugsrollen 28 greifen, die im Zusammenwirken mit Vereinzelungsrollen 30 eines Vereinzelungsmechanismus die einzelnen Banknoten 32 des Banknotenbündels 16 einzeln abziehen und der Verarbeitung in dem Geldautomaten zuführen.

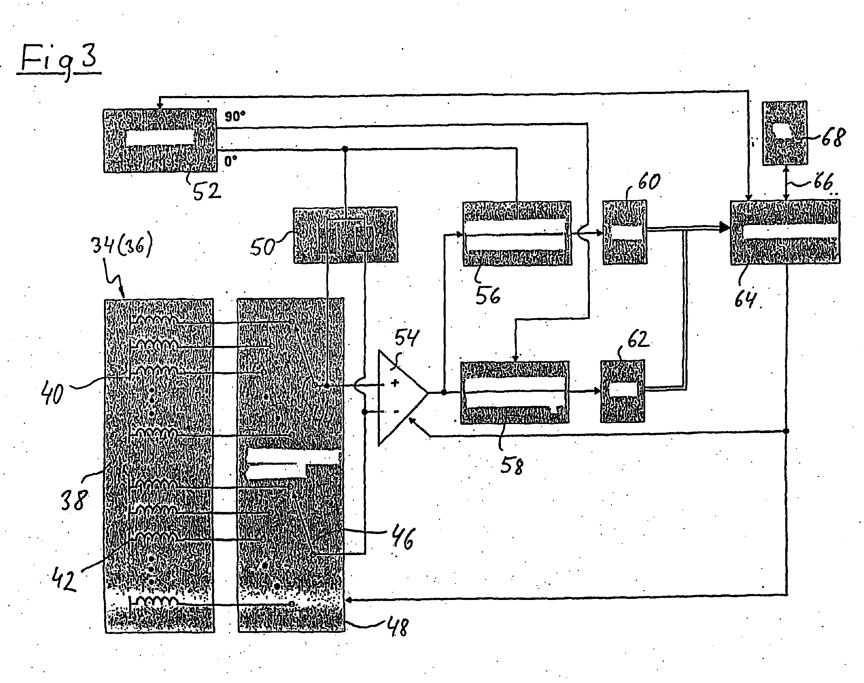

In der Praxis hat sich gezeigt, dass sich an den Banknoten häufig Büroklammern oder Stecknadeln befinden, mit denen die Banknoten zusammengeheftet sind und die zu Schäden in den Prüf- und Verarbeitungseinrichtungen innerhalb des Geldautomaten führen können. Daher muß verhindert werden, daß diese Gegenstände in den Geldautomaten gelangen. Hierzu ist an der Rückwand 18 und auch an dem Boden 20 eine flächige Sensoranordnung 34 bzw. 36 parallel zur Rückwand 18 bzw. zum Boden 20 angeordnet, die anhand der Figuren 2 und 3 beispielhaft dargestellt ist.

Die Sensoranordnung umfaßt eine Trägerplatte 38, die aus einem Metall hoher Permeabilität wie beispielsweise einem mu-Metall oder weichmagnetischen ferritischen Stahl besteht oder zumindest mit einer dünnen Schicht eines solchen Metalles bedeckt ist. Für die Empfindlichkeit der Sensoranordnung am besten wäre eine Trägerplatte aus Ferrit. Jedoch ist dieses Material in der Regel in Plattenform nicht verarbeitbar oder in Geräten wie in einem Geldautomaten einsetzbar. Auf der Trägerplatte befinden sich mindestens zwei, vorzugsweise jedoch zwei paarweise gleiche flächige Spulen, sogenannte Pfannkuchenspulen, die in Form einer einzigen Drahtwicklung oder als gedruckte Spulen auf der Trägerplattenoberfläche angeordnet werden. Die Spulen können z.B. aufgeklebt oder auf eine Folie gedruckt werden, die dann ihrerseits auf der Trägerplatte befestigt wird. Jeweils zwei voneinander beabstandete Spulen sollten identisch ausgebildet sein. Eine der Spulen bildet jeweils eine Meßspule während die andere als Kompensationsspule bezeichnet wird, wobei sich Meßspule und Kompensationsspule physikalisch gleich sind.

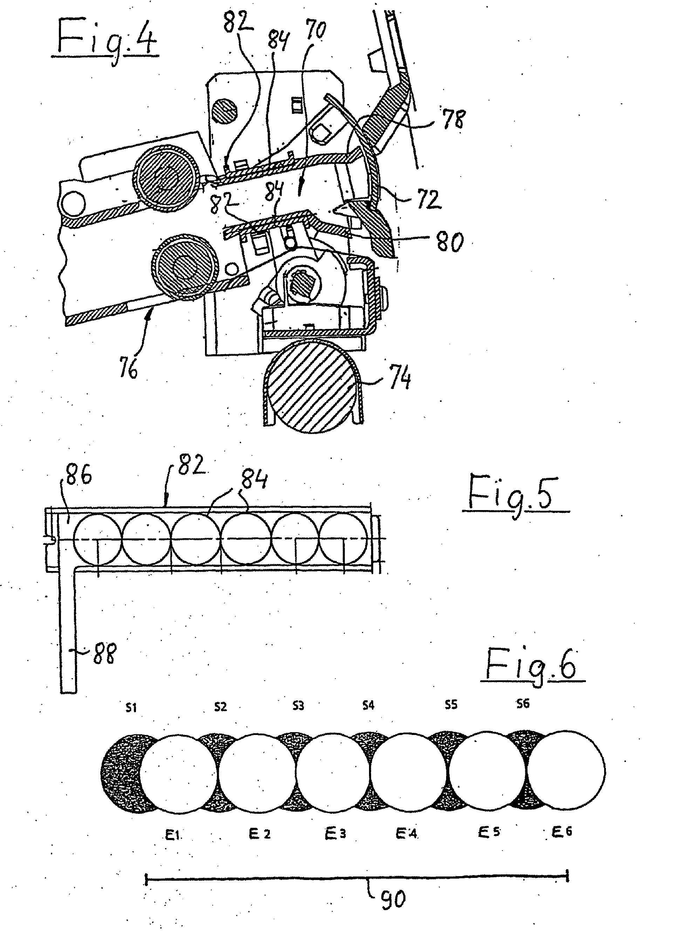

In Figur 4 erkennt man den allgemein mit 70 bezeichneten Eingabeschacht eines Bankautomaten, der zur Entgegennahme eines Bündels von Banknoten, Scheckformularen oder dergleichen geeignet ist. Der Schacht 70 wird auf seiner Eingangsseite von einer bogenförmig gekrümmten Klappe 72 verschlossen, die durch einen Motor 74 zwischen der dargestellten Schließstellung und einer Öffnungsstellung verstellt werden kann, in der sie den Schacht 70 freigibt. Auf der der Klappe 72 abgewandten Seite schließt sich an den Schacht 70 eine Einzugs- und Transportvorrichtung 76 an, die hier nicht näher erläutert werden soll und die das eingegebene Scheinbündel der weiteren Verarbeitung zuführt.

Der Eingabeschacht oder das Eingabefach 70 ist von zwei Kunststoffwänden 78 und 80 begrenzt, die zunächst im Anschluss an die Klappe 72 einen trichterförmigen Einführungsbereich definieren und anschließend hieran parallel zueinander gerichtet sind. Auf den einander abgewandten Seiten dieser parallelen Abschnitte der Wände 78 und 80 ist jeweils eine metallische Trägerplatte 82 angeordnet, die auf ihrer zum Schacht 70 hinweisenden Seite einen Satz von Spulen 84 trägt, wie dies in Figur 5 dargestellt ist. Die Spulen 84 des jeweiligen Spulensatzes sind auf eine Trägerfolie 86 aufgeklebt, die einen Fortsatz 88 hat, über den die nicht dargestellten Anschlußleitungen für die einzelnen Spulen 84 verlaufen. Die Anordnung der Spulen 84 auf dem jeweiligen Träger 82 ist dabei so getroffen, dass die beiden Spulensätze in Blickrichtung des Betrachters auf die Figur 4 um einen halben Spulendurchmesser gegeneinander versetzt sind, wie dies die Figur 6 schematisch zeigt, wobei die Linie 90 die in Blickrichtung des Betrachters der Figur 4 gemessene Breite des Schachtes 70 darstellt.

Ein von den Spulen S1 bis S6 ausgesandtes Schwingungssignal wird durch in den Schacht 70 eingeführte Metallgegenstände hinsichtlich der Amplitude und Phase verzerrt, so dass durch die Veränderung des Signals an der jeweiligen Empfängerspule E1 bis E6 das Vorhandensein eines metallischen Gegenstandes im Schacht 70 erkannt werden kann. Dabei werden die Spulen S1 bis S6 und E1 bis E6 jeweils über eine Multiplexer-Schaltung nacheinander mit einem Senderoszillator bzw. einer Empfängs- und Auswerteschaltung verbunden. Bei der Anordnung gemäß Figur 6 wird die Empfängerspule E1 sowohl mit der Senderspule S1 als auch der Senderspule S2 kombiniert. Die Empfängerspule E2 wird mit der Senderspule S2 und der Senderspule S3 kombiniert u.s.w.. Durch diese überlappende Abfrage ist eine lückenlose Überwachung der Schachtbreite möglich. Ferner können, um Zeit zu sparen, gleichzeitig beispielsweise die Sender-Empfängerpaare S1, E1 und S4, E4, die Sender-Empängerpaare S2, E2 und S5, E5 u.s.w. abgefragt werden, so dass die Breite des Schachtes 70 auch dann überwacht werden kann, wenn das Bündel relativ rasch durch den Schacht 70 bewegt wird.

Es hat sich gezeigt, daß die Empfindlichkeit dieser Anordnung so groß ist, dass beispielsweise unterschieden werden kann, ob die Störung von einer Heftklammer oder von magnetischer Tinte auf Scheckformularen herrührt. Auf diese Weise kann sicher vermieden werden, dass Metallteile in das Gerät gelangen und beispielsweise den Vereinzelungsmechanismus zum Vereinzeln der Banknoten oder Scheckformulare beschädigen oder stören.

### Bezugszeichenliste

- 10: Gehäuse
- 12: Bedienungsfeld
- 14: Aufnahmefach
- 16: Banknotenbündel
- 18: Rückwand
- 20: Boden
- 22: Deckfläche
- 24: Seitenwände
- 26: Durchbrechung
- 28: Abzugsrolle
- 30: Vereinzelungsrollen
- 32: Banknoten
- 34: Sensoranordnung
- 36: Sensoranordnung
- 38: Trägerplatte
- 40: Meßspule
- 42: Kompensationsspule
- 44: 1. Schalter
- 46: 2. Schalter
- 48: Multiplexer
- 50: Stromquelle
- 52: Oszillator
- 54: Differenzverstärker
- 56: phasenselektiver Gleichrichter
- 58: phasenselektiver Gleichrichter
- 60: AD-Wandler
- 62: AD-Wandler
- 64: Mikrocontroller
- 66: Schnittstelle
- 68: PC
- 70: Fach
- 72: Klappe
- 74: Motor
- 76: Einzugs- und Transportmechanismus
- 78: Kunststoffwand
- 80: Kunststoffwand
- 82: Trägerplatte
- 84: Spule
- 86: Trägerfolie
- 88: Fortsatz
- 90: Linie

## Patentansprüche

1. Vorrichtung zur Entgegennahme von Banknoten, Scheckformularen und dergleichen, insbesondere Geldautomat, mit einem Fach (14) zur Aufnahme eines Banknotenbündels (16) und einem Vereinzelungsmechanismus (28, 30) zum Abziehen einzelner Banknoten (32) von dem Bündel (16), wobei entlang mindestens einer der das Fach (14) begrenzenden Wände (18, 20, 22, 24) eine Sensoranordnung (34, 36) zum Erfassen von mit den Banknoten (32) verbundenen metallischen Fremdkörpern angeordnet ist und die Sensoranordnung (34, 36) als Wirbelstromsensor ausgebildet ist, **dadurch gekennzeichnet, dass** der Wirbelstromsensor zwei Sätze von Spulen (84) umfasst, die an zwei zueinander parallelen, das Fach (70) zur Aufnahme eines Banknotenbündels zwischen sich begrenzenden Wänden (78, 80) jeweils nebeneinander über die gesamte Breite des Faches (70) angeordnet sind, wobei die Spulen (84) des einen Satzes als Senderspulen und die Spulen des anderen Satzes als Empfängerspulen geschaltet sind, und wobei die Spulen (S1 bis S6) des an der einen Wand (78, 80) angeordneten Spulensatzes gegenüber den Spulen (E1 bis E6) des an der anderen Wand (80, 78) angeordneten Spulensatzes um einen halben Spulendurchmesser gegeneinander versetzt angeordnet sind.

2. Vorrichtung nach Anspruch 1, **dadurch gekennzeichnet, dass** die Spulen (84) der Spulensätze jeweils über eine Multiplexer-Schaltung nacheinander mit einem Senderoszillator bzw. einer Empfangs- und Auswerteschaltung verbindbar sind.

3. Vorrichtung nach Anspruch 2, **dadurch gekennzeichnet, daß** jeweils eine Mehrzahl von voneinander beabstandeten Spulen (84) gleichzeitig aktiviert werden.

4. Vorrichtung nach einem der Ansprüche 1 bis 3, **dadurch gekennzeichnet, daß** die Spulen (84) beider Spulensätze auf der dem Fach (70) zugewandten Seite einer metallischen Trägerplatte (82) angeordnet sind.

## Claims

1. A device for accepting bank notes, check forms and the like, in particular an automatic money machine, with a compartment (14) for receiving a banknote bundle (16) and a separating mechanism (28, 30) for withdrawing individual banknotes (32) from the bundle (16), with a sensor arrangement (34, 36) for detecting metallic foreign bodies connected with the banknotes (32) being arranged along at least one of the boundary walls (18, 20, 22, 24) of the compartment (14), said sensor arrangement (34, 36) being designed as an eddy current sensor, **characterized in that** the eddy current sensor comprises two sets of coils (84) which are arranged on two walls (78, 80) which are parallel to one another and which define the compartment (70) for receiving a banknote bundle between them, wherein the coils of each set are arranged next to one another over the entire width of the compartment (70), with the coils (84) of the one set being switched as sending coils and the coils of the other set being switched as receiving coils and with the coils (S1 to S6) of the coil set arranged on one wall (78, 80) are arranged with respect to the coils (E1 to E6) of the coil set arranged on the other wall (80, 78) so as to be displaced from one another by a half of the coil diameter.

2. The device according to claim 1, **characterized in that** the coils (84) of the sets of coils being connectable by a multiplexing circuit sequentially with a sending oscillator and a receiver-and-analyzer circuit, respectively.

3. The device according to claim 2, **characterized in that** a plurality of coils (84) spaced from one another are simultaneously activated.

4. The device according to one of the claims 1 to 3, **characterized in that** the coils (84) of the two sets of coils are arranged on the side a metallic carrier plate (82) facing the compartment (70).

## Revendications

1. Dispositif pour la réception de billets de banque, de formulaires de chèques et analogues, notamment guichet automatique de banque, comprenant un casier (14) de réception d'une liasse (16) de billets de banque et un mécanisme (28, 30) de déliassage pour retirer des billets (32) de banque individuels de la liasse (16), un dispositif (34, 36) capteur de détection de corps métalliques étrangers reliés aux billets (32) étant disposé le long d'au moins l'une des parois (18, 20, 22, 24) délimitant le casier (14) et le dispositif (34, 36) capteur étant constitué en capteur à courant de Foucault, **caractérisé en ce que** le capteur à courant de Foucault (34, 36) comporte deux ensembles de bobines (84) qui sont disposés sur deux parois (78, 80), s'étendant parallèlement et délimitant entre elles le casier (70) pour la réception d'une liasse de billets de banque, en étant côte-à-côte sur toute la largeur du casier (70), les bobines (84) du premier ensemble étant réalisées sous la forme de bobines d'émission, et les bobines de l'autre ensemble étant réalisées sous la forme de bobines de réception, et les bobines (S1 à S6) de l'ensemble de bobines disposées à l'une des parois (78, 80) étant disposées décalées par rapport aux bobines (E1 à E6) de l'ensemble de bobines disposées à l'autre paroi (80, 78) d'un demi diamètre de bobines.

2. Dispositif suivant la revendication 1, **caractérisé en ce que** les bobines (84) des ensembles de bobines peuvent être reliées par un circuit mutiplexeur successivement à un oscillateur d'émission et à un circuit de réception et d'exploitation.

3. Dispositif suivant la revendication 2, **caractérisé en ce qu'**une pluralité de bobines (84) à distance les unes des autres sont activées simultanément.

4. Dispositif suivant l'une des revendications 1 à 3, **caractérisé en ce que** les bobines (84) des deux ensembles de bobines sont disposées sur le côté tourné vers le casier (70) d'une plaque (82) de support métallique.
